# EUROPÄISCHE PATENTANMELDUNG

(11) **EP 4 600 182 A1**
(43) Veröffentlichungstag der Anmeldung: **13.08.2025**
(21) Anmeldenummer: 25156427.4
(22) Anmeldetag: 07.02.2025
(51) Int. Cl.: B65G 1/14

(54) **STAPELSÄULE FÜR EIN KRAFTFAHRZEUG-PANORAMADACH**

(30) Priorität: 09.02.2024 DE 102024103723
(71) Anmelder: MTS Maschinenbau GmbH, 88512 Mengen (DE)
(72) Erfinder: Laible, Dr. Eckhard, 71144 Leinfelden-Schlechtenmühle (DE)
(74) Vertreter: Patentanwälte und Rechtsanwalt Weiß, Arat & Partner mbB

(57) **Zusammenfassung**

Die Erfindung betrifft eine Stapelsäule für ein Kraftfahrzeug-Panoramadach, mit einer Klinke (1), wobei die Klinke an einem Ende eine erste Seitenwange (2) und eine zweite Seitenwange (3) abgekantet aufweist, wobei jede der Seitenwangen (2, 3) einen ersten Bolzendurchlass (4) und eine zweiten Bolzendurchlass (5) aufweisen, wobei die Klinke (1) eine Oberseite (6) und eine Unterseite (7) aufweist, wobei die Klinke an einem anderen Ende einen Schaumstoffkörper (11) aufweist.

## Beschreibung

### Technisches Gebiet

Die Erfindung betrifft eine Stapelsäule für ein Kraftfahrzeug-Panoramadach nach dem Oberbegriff des Anspruchs1.

### Stand der Technik

Derartige Stapelsäulen dienen insbesondere in der Automobilindustrie dazu, Blechteile, die aus einer Formanlage kommen und zur Weiterverarbeitung transportiert werden müssen, zwischenzulagern. Dies ist aber nur beispielhaft, das Lagergut ist beliebig. Es gibt heute auch vor allem Stapelsäulen für Batterien und andere sehr schwere Lagergüter. In diesem Zusammenhang gab es in den letzten Jahren immer wieder auch das Bedürfnis große, sperrige, schwere und sehr empfindliche Panoramadächer in Stapelsäulen zu lagern.

Dabei gibt es senkrechte Stapelsäulen aber auch waagrechte oder schräge, die gleichfalls der vorliegenden Erfindung unterliegen sollen.

Für das Bestücken derartiger Stapelsäulen haben sich Klinken als sehr praktikabel erwiesen, die so miteinander verbunden sind, dass sie beim Befüllen der Stapelsäule bzw. eines Gestells mit diesen Stapelsäulen aus einer Ruhelage in eine Arbeitslage bewegt werden. Dies beginnt meist durch das Belegen der untersten Klinke mit einem Werkstück, welches die unterste Klinke damit in Arbeitslage dreht. Durch dieses Drehen nimmt die unterste Klinke die nächst folgende Klinke in eine Bereitschaftsstellung, in der diese das nächste Lagergut aufnehmen kann. Durch die Aufnahme des nächsten Lagerguts wird wiederum die nachfolgende Klinke in Bereitschaftsstellung gedreht. Ausserhalb der Bereitschaftsstellung und der Arbeitslage befinden sich die Klinken in Ruhelage zwischen beispielsweise zwei Seitenwangen der Stapelsäule.

Eine derartige Stapelsäule ist beispielsweise in der DE 20 2020 104 669 U1 beschrieben.

Bezüglich der Lagerung von Kraftfahrzeug-Panoramadächer ergibt sich das Problem, dass sie über ihre gesamte Kantenlänge verlaufende und sehr empfindliche Dichtungen aufweisen.

Aus dem Stand der Technik wird auf die DE 298 08 971U1 hingewiesen, die für solche Fälle empfiehlt, dass entweder Klinkenhebel aus Kunststoff, Stahl oder Aluminium genutzt werden sollen, wobei Klinkenhebel aus Stahl oder Aluminium einen Kunststoff als stoßabsorbierendes Material aufweisen sollen. Die DE 298 08 971 U1 macht keinerlei weitere Hinweise, welches stoßabsorbierende Material noch in Frage kommen könnte.

Auch die DE 20 2007 013 310 U1 beschriebt lediglich Kunststoff als Material für die Klinken von Stapelsäulen oder Kunststoff als Material für die Einzelteile der Klinken.

Zuletzt wird auf die DE 20 2013 100 674 U1 verwiesen, welche ein Schonelement und ein Distanzelement aus Kunststoff, Gummi oder Silikon beschreibt. Nachteilig an Kunststoff ist, dass es immer wieder zum Bruch kommt. Gummi fehlt die Flexibilität, die gerade beim Transport von Kraftfahrzeug-Panoramadächern benötigt wird und Silikon weist keine ausreichende Festigkeit auf.

### Aufgabe der Erfindung

Die Aufgabe der vorliegenden Erfindung ist es, eine Stapelsäule zu schaffen, welche insbesondere zur Aufnahme und Lagerung von beispielsweise schweren und empfindlichen Kraftfahrzeug-Panoramadächern geeignet ist.

### Lösung der Aufgabe

Zur Lösung der Aufgabe führen die Merkmale nach Anspruch 1.

Die erfindungsgemässe Stapelsäule besteht aus einem U-Körper, in dessen Rinne mehrere übereinander schwenkbar angeordnete Klinken vorhanden sind, die mittels unterschiedlicher Mechanismen in eine Bereitschaftsstellung, in eine Arbeitsstellung und eine Ruhestellung bringbar sind.

Bei der hier beschriebenen Stapelsäule handelst es sich um eine Stapelsäule speziell für ein Kraftfahrzeug-Panoramadach. Der Schwerpunkt der Erfindung liegt hier in der Klinke, wobei die Klinke an einem Ende eine erste Seitenwange und eine zweite Seitenwange abgekantet aufweist, wobei jede der Seitenwangen einen ersten Bolzendurchlass und einen zweiten Bolzendurchlass aufweisen, wobei die Klinke eine Oberseite und eine Unterseite aufweist.

Als Lagergut kommt beispielsweise ein Kraftfahrzeug-Panoramadach in Frage. Es ist aber auch möglich, dass andere flächige und empfindliche Bauteile als Lagergut in Betracht kommen. Die Besonderheit besteht gerade bei Kraftfahrzeug- Panoramadächern, dass sie sperrig, empfindlich und unter Umständen auch schwer sind. Um Kraftfahrzeug-Panoramadächer erfindungsgemäß zu lagern, weist die Klinke an einem anderen Ende einen Schaumstoffkörper auf.

Der Schaumstoffkörper kann auch aus einem Gedächtnisschaum bestehen. Ein Gedächtnisschaum. Als mögliche Schaumstoffmaterialien kommen Gedächtnisschaum im Allgemeinen, Viskoelastischer Schaum, Memory Schaumstoff, Visco Schaum, Visco Gelschaum u.s.w. in Betracht. Gedächtnisschaum weist in der Regel eine sehr hohe Dichte und Viskosität auf. Sein Hauptmerkmal ist jedoch das "Formgedächtnis": Gedächtnisschaum kennt seine Ursprungsform und kehrt, sobald die Belastung nachlässt, in diese Form zurück.

Dazu ist der Schaumstoffkörper an die Klinke angespritzt. Das erleichtert die Herstellung.

In einem weiteren Ausführungsbeispiel kann der Schaumstoffkörper eine Anti-Rutsch-Oberfläche aufweisen. Dadurch wiederum wird gerade bezüglich der Kraftfahrzeug-Panoramadächer erreicht, dass nicht nur ein schonendes Auflager ermöglicht wird, sondern auch unerwünschte Bewegungen vermieden werden.

Die zwei Seitenwangen sind im Wesentlichen im rechten Winkel zu der Oberseite und/oder zu der Unterseite der Klinke abgekantet, wodurch eine höhere Steifigkeit erreicht wird. Außerdem können auf diese Weise Funktionalitäten, wie das Lagern an Gestängebolzen oder Achsbolzen erleichtert realisiert werden. Dazu sind, wie oben bereits beschrieben, entsprechend der erste Bolzendurchlass und der zweite Bolzendurchlass vorhanden. Dabei greift der Gestängebolzen beispielsweise durch die beiden zweiten Bolzendurchlässe und der Achsbolzen durch die beiden ersten Bolzendurchlässe.

Der Gestängebolzen ist notwendig, um die Klinke beispielsweise aus der Ruhestellung in die Bereitschaftsstellung zu bringen. Der Achsbolzen dient lediglich der Verschwenkbarkeit der Klinke im U-Profil. Das Drehen der Klinke von einer Arbeitslage in eine Bereitschaftsstellung und in eine Ruhelage bzw. umgekehrt ist aus dem Stand der Technik wohl bekannt. Hierzu wird insbesondere auf die im Stand der Technik genannte Schrift verwiesen.

Die Rückführung der Klinken in ihre jeweilige Ausgangslage erfolgt bevorzugt durch einen einfachen Kraftspeicher, beispielsweise durch eine Schenkelfeder, welche auf einen Achsbolzen aufgefädelt ist und lehnt dabei an die Klinke und die Rückseite eines U-Körpers an.

Weiter weist die Klinke an dem anderen Ende einen Streifen auf, der innerhalb des Schaumstoffkörpers hochgekantet ist. Das verleiht dem Schaumstoffkörper zusätzliche Stabilität zur Aufnahme von Kräften und Gewichten und gewährleistet einen besseren Halt des Schaumstoffkörpers an der Klinke.

Davon abgewandelt gibt es zusätzlich, dass nicht nur ein Streifen, sondern mindestens am anderen Ende der Klinke zwei Streifen innerhalb des Schaumstoffkörpers hochgekantet sind, wobei zwischen den beiden Streifen ein Mittelteil in einer Gesamtlänge weiterverläuft. Dies wiederum hat zusätzlich den Vorteil, dass eine größere Flexibilität bei stärkerem Halt des Schaumstoffkörpers an der Klinke gewährleistet wird.

Weiter kann der Schaumstoffkörper über eine Länge eine durchgehende oder unterbrochene Fase aufweisen, wobei die Fase auf der von der Klinke abgewandten und zu der Unterseite weisenden Seite angeordnet ist. Das hat den Vorteil, dass beim Auffahren des Schaumstoffkörpers auf das unter der Klinke gehaltene Kraftfahrzeug-Panoramadach ein Verklemmen oder ein ungewolltes Stauchen des Schaumstoffkörpers verhindert wird.

Zusätzlich wird Schutz für die Verwendung eines Schaumstoffs, wie er oben beschrieben ist, für Klinken einer Stapelsäule zum Lagern von Kraftfahrzeug-Panoramadächern beansprucht.

Ebenso wird Schutz für das Verfahren zur Herstellung einer Klinke mit Schaumstoffkörper zur Verwendung in einer Stapelsäule zum Lagern von Kraftfahrzeug-Panoramadächern durch Anspritzen beansprucht.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine perspektivische Ansicht einer Stapelsäulenklinke;
- Figur 2: eine Seitenansicht der Stapelsäulenklinke gemäß Figur 1;
- Figur 3: eine Draufsicht auf die Stapelsäulenklinke gemäß Figur 1;
- Figur 4: eine Frontansicht der Stapelsäulenklinke gemäß Figur 1;
- Figur 5: eine Seitenansicht einer weiteren Ausführungsform der Stapelsäulenklinke
- Figur 6: eine Draufsicht auf die Stapelsäulenklinke nach Figur 5.

### Ausführungsbeispiel

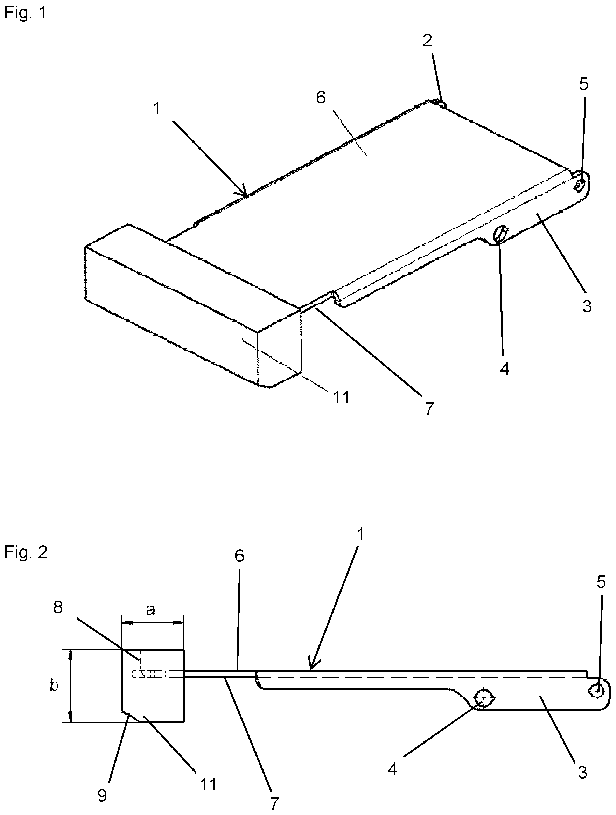

In der Figur 1 ist eine perspektivische Ansicht einer Stapelsäulenklinke 1 gezeigt. Dabei weist die Stapelsäulenklinke 1 zwei abgekantete Seitenwangen 2 und 3 auf, wobei in den Seitenwangen 2 und 3 jeweils ein erster Bolzendurchlass 4 und ein zweiter Bolzendurchlass 5 vorhanden ist.

Dabei ist Stapelsäulenklinke 1 endseitig in einem nicht gezeigten U-Körper einer ebenfalls nicht gezeigten Stapelsäule eingeschoben, wobei der zweite Bolzendurchlass 5 im Wesentlichen das eine Ende der Stapelsäulenklinke 1 beschreibt und ein Schaumstoffkörper 11 das andere Ende der Stapelsäulenklinke 1 umfängt.

Die Stapelsäulenklinke 1 weist dabei zwei Flächen auf. Es handelt sich dabei um eine Oberseite 6 und eine Unterseite 7. Die zwei Seitenwangen 2 und 3 sind in diesem Ausführungsbeispiel in Richtung der Unterseite 7 abgekantet.

Der Schaumstoffkörper 11 weist in der Seitenansicht eine erste Kantenlänge a und eine zweite Kantenlänge b auf.

In der Figur 2 sind neben den bereits beschriebenen Merkmalen auch innerhalb des Schaumstoffkörpers 11 gestrichelt dargestellte Merkmale vorhanden. Innerhalb des Schaumstoffkörpers 11 bildet die Stapelsäulenklinke 1 am anderen Ende eine teilweise aus der restlichen Struktur der Stapelsäulenklinke 1 einen hochgekanteten Streifen 8 aus. Der Streifen 8 ist dabei am anderen Ende der Stapelsäulenklinke 1 zu der Oberseite 6 abgekantet oder hochgekantet. Dabei ist die zweite Kantenlänge b so gewählt, dass der hochgekantete Streifen 8 vom Schaumstoffkörper 11 mitumfasst ist. Mitumfasst bedeutet, dass der Streifen 8 nicht aus dem Schaumstoffkörper 11 heraustritt, sondern vollständig in dem Schaumstoffkörper 11 aufgenommen ist.

Außerdem ist in Figur 2 gut gezeigt, dass der Schaumstoffkörper 11 auf seiner zu der Unterseite 7 und von der Stapelsäulenklinke 1 weg weisenden Kante eine Fase 9 aufweist.

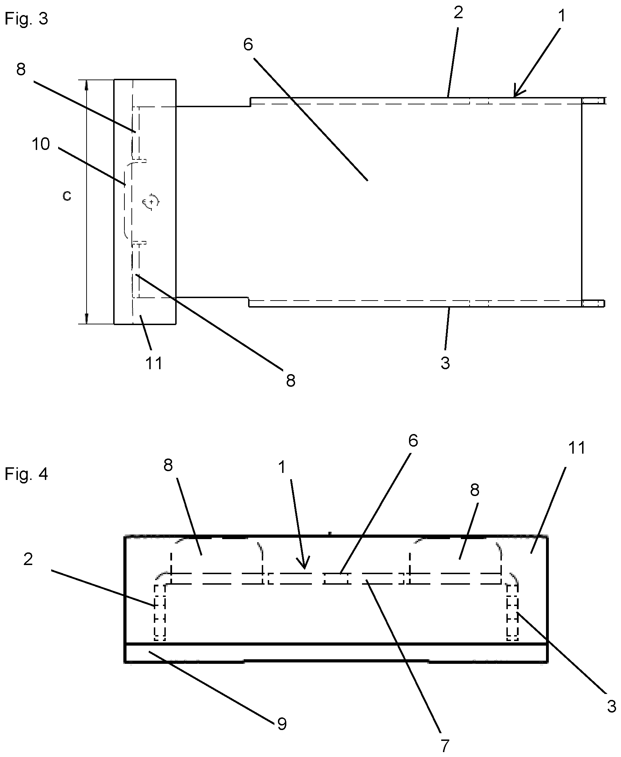

In Figur 3 ist zusätzlich zu erkennen, dass in diesem Ausführungsbeispiel innerhalb des Schaumstoffkörpers 11 zwei hochgekantete Streifen 8 vorhanden sind. Dabei ist zwischen den beiden Streifen 8 ein Mittelteil 10 angeordnet. Das Mittelteil 10 definiert gemeinsam mit den beiden hochgekanteten Streifen 8 das andere Ende der Stapelsäulenklinke 1.

Zusätzlich ist zu erkennen, dass eine Länge c des Schaumstoffkörpers 11 so gewählt ist, dass der Schaumstoffkörper 11 über die Gesamtbreite der Stapelsäulenklinke 1 hinausragt. Als Gesamtbreite ist der Bereich von der ersten Seitenwange 2 zu der zweiten Seitenwange 3 definiert. Im rechten Winkel zu der Gesamtbreite erstreckt sich eine Gesamtlänge der Stapelsäulenklinke 1
Figur 4 zeigt eine vergrößerte Frontansicht der Stapelsäulenklinke 1 aus den vorigen Figuren 1 bis 3. Um Wiederholungen zu vermeiden, wird auf die Ausführungen zu den vorigen Figuren verwiesen, insbesondere sollen die zu den Figuren 1 bis 3 gemachten Beschreibungen der Merkmale auch für die Figur 4 gelten, da die identischen Bezugszeichen verwendet wurden.

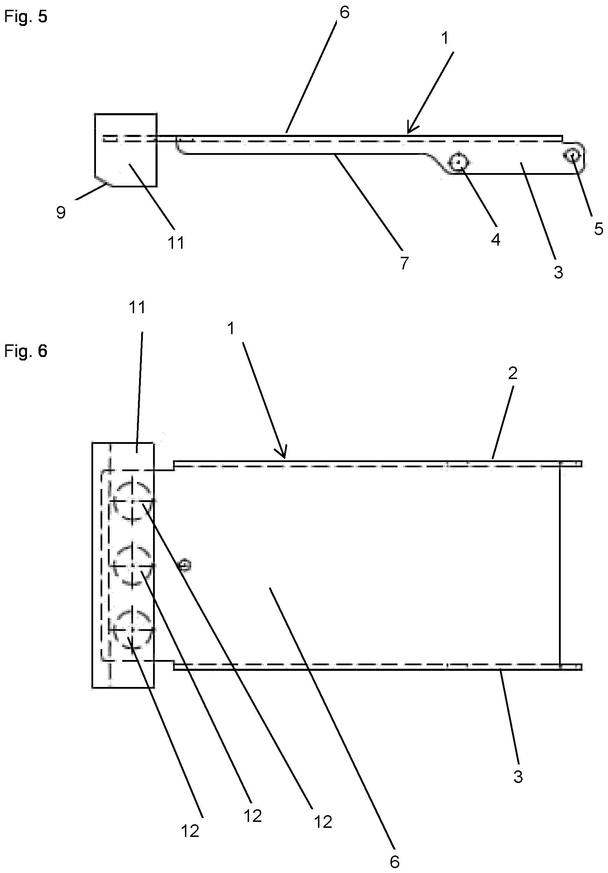

Die Figuren 5 und 6 zeigen eine weitere Ausführungsform, die aber mit leichten Abwandlungen identisch zu den Figuren 1 bis 4 sind. Daher sollen die Ausführungen zu den einzelnen Merkmalen der Figuren 1 bis 4, auch für die Figuren 5 und 6 gelten. Insbesondere dann, wenn die identischen Bezugszeichen genutzt wurden.

Anders als in den Figuren 2 bis 4 sind in den Figuren 5 und 6 kein Streifen 8 oder Mittelteil 10 vorhanden. Dafür finden sich in den Figuren 5 und 6, insbesondere in der Figur 6 gezeigt und gestrichelt dargestellt Ausnehmungen 12, die beim Herstellungsprozess dazu dienen durch das noch flüssige Material des Schaumstoffkörpers 11 umflossen zu werden und im ausgehärteten Zustand eine auch gegen Zug belastbare Verbindung zwischen dem Schaumstoffkörper 11 und der Klink1 herzustellen. Dazu befinden sich die Ausnehmungen 12 in einem Bereich der Klinke, der von dem Schaumstoffkörper 11 im ausgehärten Zustand abgedeckt ist.

Die Funktionsweise der vorliegenden Erfindung ist folgende:
In der Regel ist eine Mehrzahl von Stapelsäulen im Dreieck oder in einem Rechteck aufgestellt, wobei sie einen Aufnahmeraum für ein Ladegut, im vorliegenden Fall insbesondere einem schweren und empfindliche Ladegut, bilden. Die Klinken greifen in die lichte Weite dieses Aufnahmeraums ein, um das Ladegut zwischen den Stapelsäulen zu halten.

Die hier beschriebene Erfindung der Stapelsäulenklinke 1 dient in erster Linie zur Halterung schwerer und empfindlicher Ladegüter, wie beispielsweise Panoramadächern von Kraftfahrzeugen.

Diese Panoramadächer weisen beispielsweide eine umlaufende sehr empfindliche Dichtung auf, die in keinem Fall einem Druck ausgesetzt werden darf, da es ansonsten später zu Undichtigkeiten an der betreffenden Stelle kommen kann, die dem Druck ausgesetzt wurde. Bei den herkömmlichen Klinken für Stapelsäulen kommt es in der Regel zu einer flächigen Auflage, was im Fall der beschriebenen Panoramadächer beispielsweise zu Druckstellen an der umlaufenden Dichtung führt.

Durch den Schaumstoffkörper 11 kann das in der Regel beispielsweise konvex gestaltete Panoramadach flächig und weich aufgenommen werden. Ähnliche gilt auch für entsprechende empfindliche andere Lagergüter. Durch die Bemaßung der zweiten Kantenlänge b im Zusammenspiel mit der ersten Kantenlänge a und der Länge c kann auf die Bemaßung der jeweiligen Panoramadächer eingegangen werden, sodass das Panoramadach nicht an der umlaufenden Kante, sondern im Glasbereichs eine ausschliessliche Berührung erfolgt.

In gleicher Weise erlaubt die jeweilige Bemaßung des Schaumstoffkörpers 11 auch ein oben drüber oder unten drunter gehaltertes Panoramadach nicht nur auf die das Panoramadach tragende Stapelsäulenklinke 1 abzulegen, sondern auch mit der die Fase 9 aufweisenden Seite ein darunter aufgenommenes Panoramadach von oben drückend zu haltern und ungewollte Vibrationen zu minimieren.

**Bezugszeichenliste**

| | |
|---|---|
| 1 | Klinke |
| 2 | Erste Seitenwange |
| 3 | Zweite Seitenwange |
| 4 | Erster Bolzendurchlass |
| 5 | Zweiter Bolzendurchlass |
| 6 | Oberseite |
| 7 | Unterseite |
| 8 | Streifen |
| 9 | Fase |
| 10 | Mittelteil |
| 11 | Schaumstoffkörper |
| 12 | Ausnehmung |
| | |
| a | Erste Katenlänge |
| b | Zweite Kantenlänge |
| c | Länge |

## Patentansprüche

1. Stapelsäule für ein Lagergut, mit einer Klinke (1), wobei die Klinke an einem Ende eine erste Seitenwange (2) und eine zweite Seitenwange (3) abgekantet aufweist, wobei jede der Seitenwangen (2, 3) einen ersten Bolzendurchlass (4) und einen zweiten Bolzendurchlass (5) aufweisen, wobei die Klinke (1) eine Oberseite (6) und eine Unterseite (7) aufweist,
**dadurch gekennzeichnet, dass**
die Klinke an einem anderen Ende einen Schaumstoffkörper (11) aufweist.

2. Stapelsäulen nach Anspruch 1, **dadurch gekennzeichnet, dass** an der Klinke (1) der Schaumstoffkörper (11) angespritzt ist.

3. Stapelsäule nach einem der vorigen Ansprüche, **dadurch gekennzeichnet, dass** der Schaumstoffkörper (11) eine Anti-Rutsch-Oberfläche aufweist.

4. Stapelsäule nach einem der vorigen Ansprüche, **dadurch gekennzeichnet, dass** der Schaumstoffkörper (11) aus einem Gedächtnisschaum besteht.

5. Stapelsäule nach einem der vorigen Ansprüche, **dadurch gekennzeichnet, dass** die zwei Seitenwangen (2, 3) im rechten Winkel zu der Oberseite (6) und/oder zu der Unterseite (7) der Klinke (1) abgekantet sind.

6. Stapelsäule nach einem der vorigen Ansprüche, **dadurch gekennzeichnet, dass** die Klinke (1) im Bereich des Schaumstoffkörpers (11) eine Ausnehmung (12) zur Halterung des Schaumstoffkörpers (11) an der Klinke vorhanden ist.

7. Stapelsäule nach einem der vorigen Ansprüche, **dadurch gekennzeichnet, dass** an dem anderen Ende der Klinke (1) ein Streifen (8) innerhalb des Schaumstoffkörpers (11) hochgekantet ist.

8. Stapelsäule nach Anspruch 6, **dadurch gekennzeichnet, dass** an dem anderen Ende der Klinke (1) zwei Streifen (8) innerhalb des Schaumstoffkörpers (11) hochgekantet sind, wobei zwischen den beiden Streifen (8) ein Mittelteil (10) in einer Gesamtlänge weiterverläuft.

9. Stapelsäule nach einem der vorigen Ansprüche 1 bis 8, **dadurch gekennzeichnet, dass** der Schaumstoffkörper (11) über eine Länge (c) eine durchgehende oder unterbrochene Fase (9) aufweist, wobei die Fase (9) auf der von der Klinke (1) abgewandten und zu der Unterseite weisenden Seite angeordnet ist.

10. Verwendung eines Schaumstoffs für eine Stapelsäulenklinke (1) nach den Ansprüchen 1 bis 8.

11. Verfahren zur Herstellung einer Stapelsäulenklinke (1) nach den Ansprüchen 1 bis 9, **dadurch gekennzeichnet, dass** ein Schaumstoff an die Stapelsäulenklinke (1) angespritzt wird.
